Europäisches Patentamt

**European Patent Office**

Office européen des brevets

(11) Veröffentlichungsnummer: **0 031 129**
**B1**

(12) **EUROPÄISCHE PATENTSCHRIFT**

(45) Veröffentlichungstag der Patentschrift:
**13.02.85**

(21) Anmeldenummer: **80107951.8**

(22) Anmeldetag: **17.12.80**

(51) Int. Cl.⁴: **B 31 B 39/64**

(54) Verfahren zum Verschweissen der Innenlagen von mehrlagigen Papiersäcken.

(30) Priorität: **21.12.79 DE 2951597**
**06.12.80 DE 3046036**

(43) Veröffentlichungstag der Anmeldung:
**01.07.81 Patentblatt 81/26**

(45) Bekanntmachung des Hinweises auf die Patenterteilung:
**13.02.85 Patentblatt 85/7**

(84) Benannte Vertragsstaaten:
**DE FR GB IT**

(56) Entgegenhaltungen:
**DE - B - 1 097 248**
**DE - B - 1 230 300**
**FR - A - 1 560 594**
**US - A - 2 339 896**
**US - A - 2 537 462**
**US - A - 2 606 856**
**US - A - 2 682 910**
**US - A - 3 131 623**
**US - A - 3 155 017**
**US - A - 3 248 843**
**US - A - 3 254 574**

(73) Patentinhaber: **Icoma Packtechnik GmbH, Fautenbacher Strasse 26, D-7590 Achern (DE)**

(72) Erfinder: **Kuckhermann, Gustav, FautenbacherStrasse 24, D-7590 Achern (DE)**

(74) Vertreter: **Patentanwälte Dipl.-Ing. Bodo Thielking Dipl.-Ing. Otto Elbertzhagen, Gadderbaumer Strasse 20, D-4800 Bielefeld 1 (DE)**

## Beschreibung

Die Erfindung betrifft ein Verfahren zum Verschweißen der Innenlage eines mehrlagigen Papiersacks mit verschweißbarer Innenlage oder auf der Innenlage vorgesehener verschweißbarer Innenschicht und gestaffelter Verschlußklappe, bei dem von außen Wärme zum Verschweißen der aufeinanderliegenden Innenschichten zugeführt wird.

Mehrlagige Papiersäcke mit verschweißbaren Innenlagen sind in unterschiedlichen Ausführungsformen bekannt. Es kann beispielsweise eine Folienbahn auf die innenliegende Papierlage aufkaschiert oder aufgeklebt sein. Es kann auch die Innenseite der Innenlage mit einer thermoplastischen Beschichtung versehen sein, beispielsweise mit einer Polyäthylenbeschichtung.

Bisher erfolgte das Verschweißen der verschweißbaren Innenlage durch Aufbringen der Wärme mit unterschiedlichen Verfahren. Es ist beispielsweise bekannt, die erforderliche Wärme mit beheizten Druckleisten auf die zu verschweißenden Stellen aufzubringen. Auch das Verschweißen mit Hilfe von Infrarotstrahlen ist bekannt.

Bei Falzbodensäcken, deren Herstellung vergleichsweise aufwendig ist und die keine gestaffelte Verschlußklappe aufweisen, ist es auch bekannt, vor dem Verschweißen die Papierlage von der verschweißbaren Innenlage wegzuklappen, so daß die zum Verschweißen benötigte Wärme direkt auf die freiliegenden Innenlagen aufgebracht werden kann (US-A-2 537 462). Verfahrensschritte, die die Innenlagen bei diesem bekannten Verfahren frei zugänglich machen, sind aufwendig.

Bei Verpackungskartons (DE-B-1 097 248) ist es bekannt, die aneinanderliegenden Kanten einer Innenhülle mit Schmelzkleber zu beschichten, der durch Wärmeeinwirkung aktiviert wird. Nach dem Aktivieren werden die aktivierten Klebebereiche aufeinandergepreßt und damit ein Verschließen der Innenhülle bewirkt. Auch dieses Verfahren ist sehr umständlich. Der verfahrenstechnische Aufwand ist sehr groß.

Bei den bekannten Verfahren zur Herstellung von Papiersäcken der eingangs erwähnten Art, also von Papiersäcken mit gestaffelter Verschlußklappe, wie es unter anderem aus DE-B-1 097 248 bekannt ist, war bisher wegen des Problems, in kürzester Zeit eine ausreichend hohe Erwärmung der Innenlage zu erzielen, die Verarbeitungsgeschwindigkeit geringer, als sie nach den übrigen technischen Voraussetzungen hätte sein können.

Der Erfindung liegt die Aufgabe zugrunde, ein Verfahren der eingangs erwähnten Art so auszubilden, daß es eine von der Zahl und Dicke der äußeren Lagen unabhängige, möglichst hohe Verarbeitungsgeschwindigkeit erlaubt.

Die Lösung dieser Aufgabe erfolgt erfindungsgemäß dadurch, daß vor dem Verschweißen die auf der Rückseite des Papiersacks angeordnete Verschlußklappe von der Innenlage weggeklappt wird und daß die zum Verschweißen der Innenlage benötigte Wärmeenergie schräg von vorn auf die Stirnkanten der Innenlage aufgebracht wird.

Ein derartiges Verfahren erlaubt eine extrem hohe Verarbeitungsgeschwindigkeit der Papiersäcke. Dadurch, daß die zur Verschweißung erforderliche Wärme unmittelbar auf die zu verschweißenden Innenschichten aufgebracht werden kann und nicht hindernde Außenschichten durchtreten muß, können die erforderlichen Schweißverbindungen nicht nur schnell sondern auch in hoher Qualität erstellt werden.

Weitere bevorzugte Merkmale sind in den Unteransprüchen beschrieben. Nachstehend wird die Erfindung anhand der Zeichnung im einzelnen erläutert. Es zeigt

Fig. 1 eine perspektivische Ansicht eines Seitenfaltensacks mit Verschlußklappe, der mit dem erfindungsgemäßen Verfahren verarbeitet werden kann,

Fig. 2 eine schematische Seitenansicht auf das Ende eines dreilagigen Seitenfaltensacks,

Fig. 3 eine Draufsicht von oben auf den Seitenfaltensack gemäß Fig. 2,

Fig. 4 die schematische Ansicht gemäß Fig. 2 mit nach hinten weggeklappter Verschlußklappe,

Fig. 5 die schematische Draufsicht gemäß Fig. 3 mit nach hinten weggeklappter Verschlußklappe,

Fig. 6 eine perspektivische Ansicht eines Seitenfaltensacks, wie er in Fig. 1 dargestellt ist,

Fig. 7 eine schematische Seitenansicht auf das Ende eines dreilagigen Seitenfaltensacks analog Fig. 2,

Fig. 8 eine Draufsicht von oben auf den Seitenfaltensack gemäß Fig. 7,

Fig. 9 die schematische Ansicht des Seitenfaltensacks gemäß Fig. 7 mit einer Verschweißeinrichtung,

Fig. 10 eine Draufsicht auf den Seitenfaltensack mit seitlich weggeklappter Verschlußklappe gemäß Fig. 9.

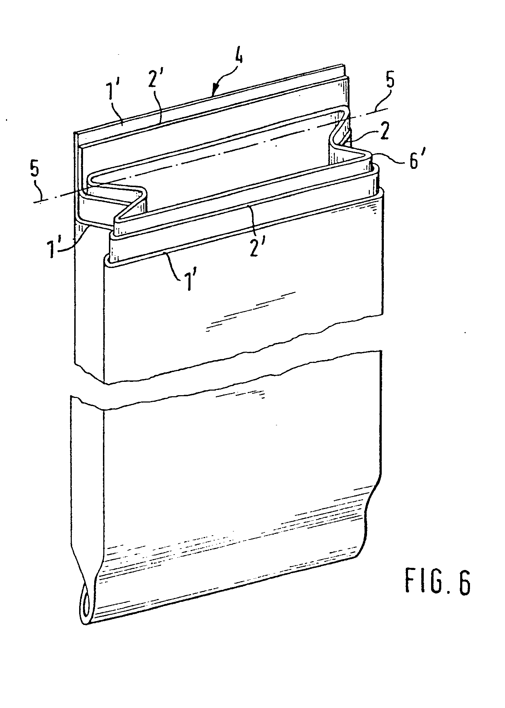

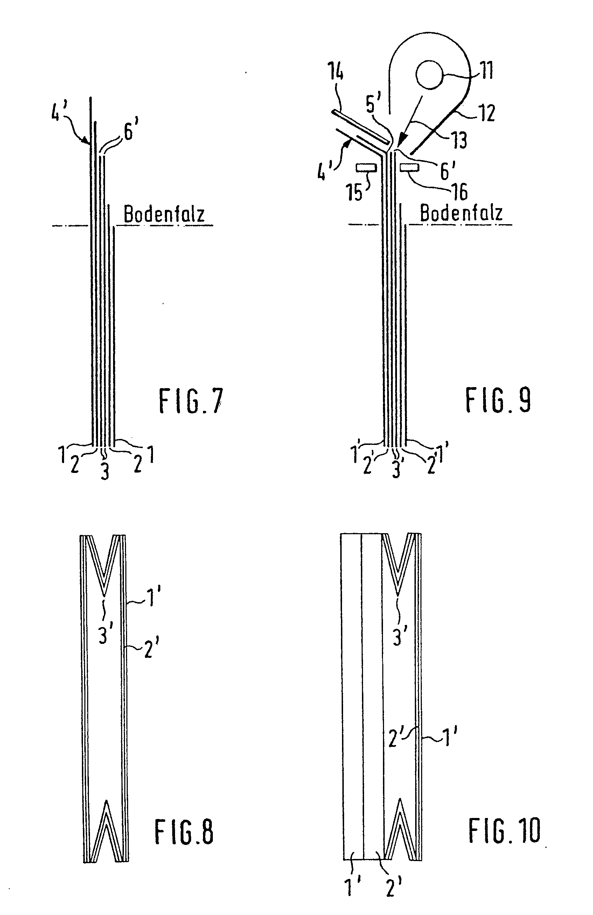

In den Zeichnungen sind gleiche Teile jeweils mit gleichen Bezugzeichen versehen. Bei der Ausführungsform gemäß Fig. 6 bis 10 sind diese Bezugzeichen mit einem Hochstrich versehen.

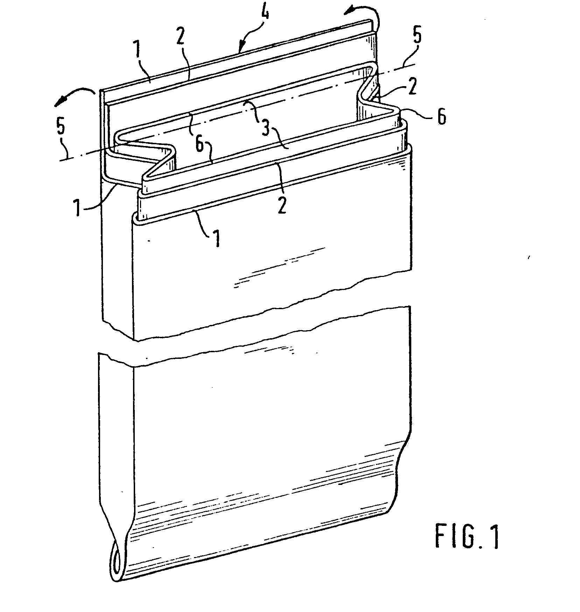

Zunächst zur Ausführungsform gemäß Fig. 1 bis 5:

Der Seitenfaltensack besteht aus insgesamt drei Lagen, nämlich aus zwei äußeren Papierlagen 1 und 2 und einer Innenlage 3, die ebenfalls aus Papier besteht, jedoch eine Polyäthylenbeschichtung an ihrer Innenseite aufweist. Zur Verwendung des erfindungsgemäßen Verfahrens sind auch Säcke mit beliebig viel Außenlagen aus Papier geeignet. Je größer die Anzahl der äußeren Lagen aus Papier ist, desto vorteilhafter wird die Anwendung des erfindungsgemäßen Verfahrens.

Die Innenlage 3 kann auch beispielsweise einen aufkaschierten Polyäthylenfilm und/oder eine aufkaschierte Aluminiumfolie aufweisen. Es ist auch möglich, daß die Innenlage 3 vollständig aus Polyäthylen besteht.

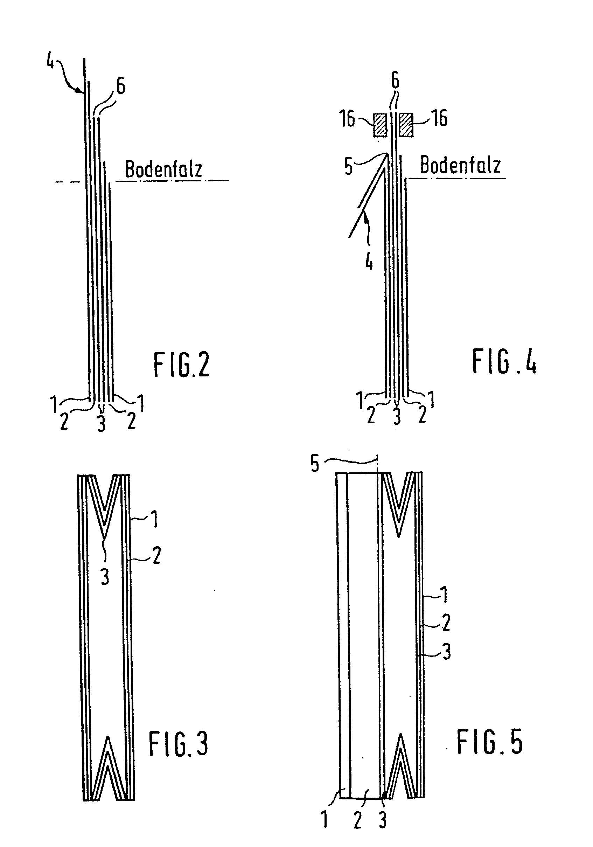

Das Wegklappen der Verschlußklappe 4 erfolgt entlang der Faltlinie 5. Durch das Wegklappen der Verschlußklappe 4 nach hinten wird die Innenlage 3 von beiden Seiten aus zugänglich (vgl. Fig. 4) und kann dann, beispielsweise mit Hilfe von Wärmeschweißbacken 16, verschweißt werden. Die Falzlinie 5 liegt — in Richtung auf das Sackzentrum gesehen — hinter den Kanten 6 der Innenlage 3, die verschweißt werden soll.

Nun zur Ausführungsform gemäß Fig. 6 bis 10:

Auch bei dieser Ausführungsform besteht der Seitenfaltensack aus insgesamt drei Lagen, nämlich aus zwei äußeren Papierlagen 1' und 2' und einer Innenlage 3'. Die Innenlage 3' besteht ganz oder teilweise aus Polyäthylen.

Das Wegklappen der Verschlußklappe 4' erfolgt entlang der Faltlinie 5'. Durch das Wegklappen der Verschlußklappe 4' entlang der Faltlinie 5' werden die Stirnkanten 6' der Innenlage 3' für die Wärmeeinwirkung besser zugänglich.

Ein Infrarotstrahler, der im wesentlichen aus einem Heizstab 11 und einem Reflektorspiegel 12 besteht, gibt seine Energie in Richtung des Pfeils 13 an die Stirnkanten 6' der Innenlage 3' ab. Die Klappe 4' mit den beiden äußeren Papierschichten ist dabei gemäß Fig. 4 nach hinten geklappt. Ein Schutzschild 14 stellt sicher, daß die Schweißenergie gezielt auf die Stirnkanten 6' der Innenlage 3' gelangt. Zwei Andrückorgane 15 und 16 werden gegeneinander gepreßt und verhindern, daß die Schweißenergie sich über einen größeren Bereich verteilen kann, als er vor den Andrückorganen 15 und 16 in Richtung auf den Infrarotstrahler vorsteht. Bei Wärmeeinwirkung endet der Verschweißvorgang an den Andrückorganen 15 und 16.

Die Andrückorgane 15 und 16 sitzen ca. 5 bis 10 mm hinter den Stirnkanten 6' der Innenlage 3'. Die Innenlage 3' kann auch als kunststoffkaschierte Papierlage ausgebildet sein.

Die Andrückorgane 15 und 16 können bei Bedarf auch mehrteilig ausgebildet sein und mit Hilfe von Andruckfedern das Anpressen bewirken.

## Patentansprüche

1. Verfahren zum Verschweißen der Innenlage (3; 3') eines mehrlagigen Papiersacks mit verschweißbarer Innenlage oder auf der Innenlage vorgesehener verschweißbarer Innenschicht und gestaffelter Verschlußklappe (4; 4'), bei dem von außen Wärme zum Verschweißen der aufeinanderliegenden Innenschichten zugeführt wird, dadurch gekennzeichnet, daß vor dem Verschweißen die auf der Rückseite des Papiersacks angeordnete Verschlußklappe (4; 4') von der Innenlage (3; 3') weggeklappt wird und daß die zum Verschweißen der Innenlage (3; 3') benötigte Wärmeenergie schräg von vorn auf die Stirnkanten (6; 6') der Innenlage (3') aufgebracht wird.

2. Verfahren nach Anspruch 1, dadurch gekennzeichnet, daß die Innenlage (3; 3') um eine Falzlinie (5; 5') weggeklappt wird, die in Sacklängsrichtung gesehen hinter den Stirnkanten (6; 6') zurückliegt.

3. Verfahren nach Anspruch 1, dadurch gekennzeichnet, daß die Falzlinie (5') zumindest annähernd bündig liegt mit den Stirnkanten (6') der Innenlage (3').

4. Verfahren nach einem oder mehreren der Ansprüche 1 bis 3, dadurch gekennzeichnet, daß die zum Verschweißen benötigte Wärmeenergie mittels Infrarotstrahlern (11; 12) aufgebracht wird, deren Energieabgabe in Abhängigkeit von der Vorschubgeschwindigkeit des Papiersacks regelbar ist.

## Claims

1. Process for welding the inner ply (3; 3') of a multi-ply paper sack having a weldable inner ply or a weldable inner layer provided on the inner ply, and having a staggered sealing flap (4; 4'), in which heat to weld the inner layers resting on one another is supplied from the outside, characterised in that before the welding process the sealing flap (4; 4') located on the rear of the paper sack is folded away from the inner ply (3; 3') and that the thermal energy required for welding the inner ply (3; 3') is applied at an angle, from the front, onto the end edges (6; 6') of the inner ply (3').

2. Process according to Claim 1, characterised in that the inner ply (3; 3') is folded away about a fold line (5; 5') which, viewed in the lengthwise direction of the sack, is set back from the end edges (6; 6').

3. Process according to Claim 1, characterised in that the fold line (5') is at least approximately flush with the end edges (6') of the inner ply (3').

4. Process according to one or more of Claims 1 to 3, characterised in that the thermal energy required for welding is applied by means of infrared radiators (11; 12), the energy emission of which can be regulated as a function of the speed of forward travel of the paper sack.

## Revendications

1. Procédé pour souder la couche intérieure (3, 3') d'un sac de papier à plusieurs couches comportant une couche intérieure soudable ou une couche de doublure intérieure soudable prévu sur la couche intérieure et un volet de fermeture échelonné (4, 4'), selon lequel la chaleur pour le soudage des couches de doublure juxtaposées l'une contre l'autre provient de l'extérieur, caractérisé en ce que, avant le soudage, le volet de fermeture (4, 4') disposé au dos du sac en papier est rabattu à l'écart de la couche intérieure (3, 3') et l'énergie thermique nécessaire pour souder la couche intérieure (3, 3') est appliquée obliquement de l'avant sur les bords d'extrémité (6, 6') de la couche intérieure (3').

2. Procédé suivant la revendication 1, caractérisé en ce que le volet échelonné (4, 4') est rabattu autour d'une ligne de pliage (5, 5') qui, vue dans le sens de la longueur du sac, se situe en arrière des bords d'extrémité (6, 6').

3. Procédé suivant la revendication 1, caractérisé en ce que la ligne de pliage (5') est disposée au moins à peu près au niveau des bords d'extrémité (6') de la couche intérieure (3').

4. Procédé suivant l'une quelconque des revendications 1 à 3, caractérisé en ce que l'énergie thermique nécessaire pour le soudage est appliquée au moyen de dispositifs émettant des rayons infrarouges (11, 12) dont l'apport d'énergie peut être réglé en fonction de la vitesse d'avancement du sac en papier.

FIG.1

Bodenfalz

**FIG.2**

Bodenfalz

**FIG.4**

**FIG.3**

**FIG.5**

FIG. 6

FIG.7

FIG.9

FIG.8

FIG.10